Europäisches Patentamt

(19) European Patent Office

Office européen des brevets

(11) Numéro de publication : **0 153 884**
**B1**

(12) **FASCICULE DE BREVET EUROPÉEN**

(45) Date de publication du fascicule du brevet :
**11.11.87**

(21) Numéro de dépôt : **85400039.5**

(22) Date de dépôt : **10.01.85**

(51) Int. Cl.⁴ : **B 25 J   9/06**, B 25 J   9/08,
**B 25 J  18/00**

(54) **Bras de manipulation modulaire.**

(30) Priorité : **07.02.84 FR 8401801**

(43) Date de publication de la demande :
**04.09.85 Bulletin 85/36**

(45) Mention de la délivrance du brevet :
**11.11.87 Bulletin 87/46**

(84) Etats contractants désignés :
**AT BE CH DE GB IT LI LU NL SE**

(56) Documents cités :
**EP-A- 0 107 968**
**DE-B- 2 225 476**
**FR-A- 2 108 892**
**FR-A- 2 378 612**
**SU-A-   766 856**
**US-A- 3 712 481**
**US-A- 4 046 262**
**US-A- 4 160 508**

(73) Titulaire : **Gabillet, Maurice**
**53 rue d'Aguesseau**
**F-92100 Boulogne (FR)**

(72) Inventeur : **Gabillet, Maurice**
**53 rue d'Aguesseau**
**F-92100 Boulogne (FR)**

## Description

La présente invention concerne les éléments constitutifs et le mécanisme de commande d'un bras de manipulation.

Les robots de manutention actuels sont le plus souvent constitués d'un corps vertical, d'un bras et d'un avant-bras avec poignet portant la main de préhension. Le corps a un mouvement de rotation suivant un axe vertical, le bras un mouvement vertical ou de rotation suivant un axe horizontal — dans ce cas l'avant-bras peut se plier par rapport au bras — enfin le poignet qui porte la main de préhension peut s'orienter suivant deux axes perpendiculaires : en définitive au minimum 5 axes commandés en vitesse et position par un servomécanisme spécifique.

Tous les points de l'espace proche ne sont pas pour autant accessibles et, souvent un 6e axe doit être ajouté (Robot de peinture). Les trois éléments différents dont sont constitués ces robots sont rigides, d'où un encombrement dynamique important et une directivité limitée par l'environnement dans lequel ils sont généralement installés. Il serait avantageux de pouvoir disposer d'éléments identiques, articulés, de faible longueur, susceptibles de pouvoir contourner les obstacles et d'une longueur totale adaptée aux distances à parcourir pour atteindre l'objet à manipuler.

L'invention fournit un bras de manipulation comportant un certain nombre de couples, d'éléments disposés en série et articulés les uns sur les autres, chaque élément portant deux moyens d'accouplement qui les relient chacun à un élément adjacent avec possibilité de pivotement autour d'un axe, où :

les axes de pivotement des moyens d'accouplement d'un élément se rencontrent et font entre eux un angle compris entre 0 et 90 degrés ;

des moyens sont prévus pour faire pivoter ou immobiliser à volonté un élément par rapport à un élément adjacent autour de l'axe du moyen d'accouplement correspondant.

Un bras du même genre est décrit dans le document US-A-4 046 262.

De préférence, le premier élément est fixé à une manivelle mobile dans un plan.

Lesdits moyens pour faire pivoter ou immobiliser un élément par rapport à un élément adjacent sont constitués par :

un arbre formé d'un certain nombre de tronçons rigides dont au moins un est coaxial à l'axe de pivotement d'un des moyens d'accouplement dudit élément, lesdits tronçons étant reliés par des joints universels placés au point d'intersection de deux axes de pivotement successifs ;

un moyen d'entraînement en rotation alternative de cet arbre, avantageusement composé d'une bielle tourillonnant autour d'un moyeu excentrique, ladite bielle coulissant d'autre part dans le tronçon rigide associé au premier élément et perpendiculairement à lui ;

un embrayage reliant à volonté lesdits éléments auxdits tronçons constituant l'arbre d'entraînement ;

un frein capable d'empêcher le pivotement relatif des deux éléments adjacents.

N.B. Lesdits moyens pour faire pivoter ou immobiliser un élément par rapport aux éléments adjacents peuvent être également constitués par un moteur associé à cet élément et entraînant le ou les éléments adjacents par un couple d'engrenages 1 ou 2 embrayages solidarisent ou non les pignons d'engrenage aux bouts d'arbre du moteur.

De préférence, lesdits moyens d'accouplement d'un élément avec un élément adjacent comprennent un roulement et à l'intersection, les axes de pivotement des deux moyens d'accouplement d'un même élément se trouvent dans le plan diamétral de ce roulement. Un autre mode de liaison entre les éléments d'accouplement est proposé ; le moyen d'accouplement est alors constitué de 2 roulements rendus solidaires par une bague intérieure ou extérieure, chaque élément d'accouplement étant lui-même emboîté sur la cage extérieure ou intérieure de chaque roulement. Le montage et démontage des éléments d'accouplement en est facilité, la bague pouvant également servir de support aux transmissions mécaniques ou en énergie hydraulique, électrique ou autre.

De préférence, les angles des axes de pivotement des moyens d'accouplement des éléments successifs formant une ligne brisée, sont alternativement nuls et non nuls.

De préférence, la manivelle de fixation du premier élément du bras de manipulation peut se déplacer dans un plan horizontal ou vertical par l'intermédiaire d'un moto-réducteur commandable en position ou d'un moteur pas à pas.

De préférence, les moyens de commande du mouvement utilisent un ou plusieurs microprocesseurs pour remplir entre autres les fonctions suivantes :

mémorisation des coordonnées cylindriques et des positions angulaires successives de la main de préhension ;

calcul des positions angulaires des éléments les uns par rapport aux autres et de la position angulaire de la manivelle en fonction d'une stratégie de déformation du bras tenant compte des obstacles ;

commande des mouvements angulaires des éléments correspondants aux séquences successives à exécuter en prenant en compte les ordres logiques extérieurs ; plus particulièrement le (ou les) microprocesseur établit les états vrais ou faux des embrayages et freins de façon à maintenir la solidarité statique et dynamique de tous les éléments du bras entre eux.

Bien évidemment les dispositifs décrits ci-dessus sont complémentaires dans la mesure où ils impliquent la prise en compte de la modularité des éléments constitutifs à la fois au niveau mécanique, informatique et de contrôle commande.

L'invention sera mieux comprise en se référant aux figures 1, 2, 3, 4, 5, 6 et 7 qui illustrent de façon non limitative deux modes de mise en œuvre de l'invention.

La figure 1 est une vue schématique, en élévation de l'ensemble du manipulateur et du dispositif à manivelle qui assure le déplacement angulaire du premier élément d'accouplement de celui-ci.

La figure 2 est une vue du dispositif bielle-excentrique qui assure le mouvement angulaire alternatif de l'arbre de commande en rotation des éléments du bras.

La figure 3 présente une coupe d'un couple d'éléments avec leurs moyens d'accouplement, l'arbre d'entraînement, les embrayages et les freins reliant les éléments entre eux et à l'arbre d'entraînement.

La figure 4 présente une autre solution permettant de faire pivoter les éléments les uns par rapport aux autres.

La figure 5 présente un mode de réalisation des moyens d'accouplement entre les éléments de liaison.

La figure 6 est une vue schématique de l'appareil montrant les possibilités d'orientation du bras.

Les figures 7a et 7b enfin donnent 2 exemples d'algorithmes de commande de l'appareil.

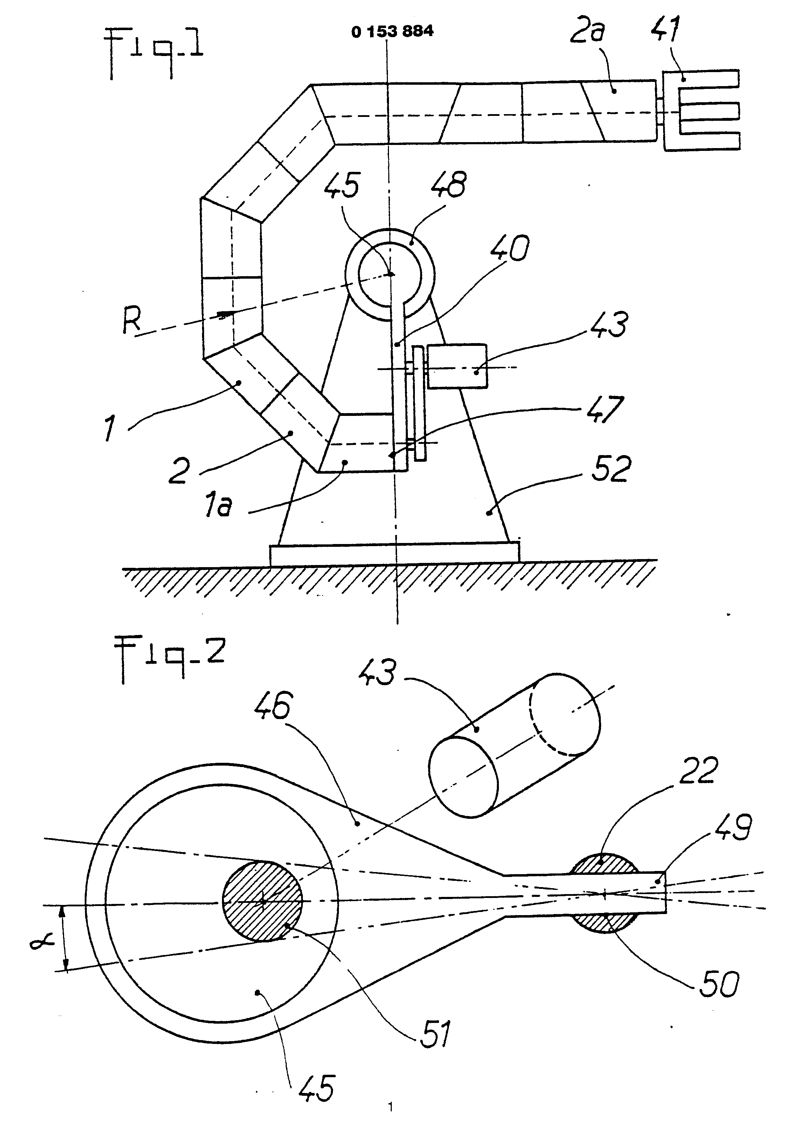

On se réfère d'abord à la figure 1. Une manivelle (40), mobile autour d'un axe horizontal ou vertical (45) peut se déplacer angulairement d'un angle variable au moyen du moto-réducteur (48).

Le premier élément du bras de manipulation (1a) est fixé à l'extrémité de cette manivelle au point (47).

Ledit point décrivant un arc de cercle et plusieurs éléments successifs pouvant être orientés de façon à faire entre eux un angle constant, la partie non utilisée du bras peut alors être enroulée suivant un arc de cercle de rayon R égal à la longueur de la manivelle et de centre l'axe de cette manivelle.

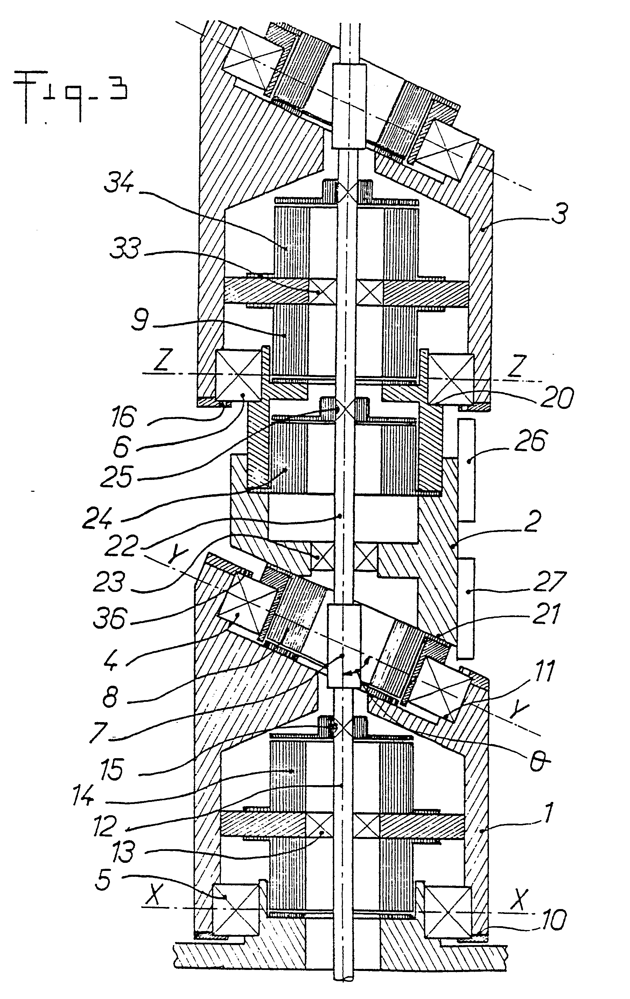

On se réfère maintenant à la figure 2. Une bielle (46) tourillonne librement autour d'un moyeu excentrique (45) mis en rotation par le moteur (43). La tige (49) de la bielle peut coulisser dans un trou (50) percé dans la partie inférieure du premier tronçon (22) de l'arbre du manipulateur et perpendiculairement à cet arbre. Lorsque le moyeu excentrique est mis en rotation, la tige de bielle prend alternativement une inclinaison gauche et droite en faisant tourner l'arbre d'entraînement d'un angle α alternativement à gauche et à droite. Par le jeu des embrayages et des freins associés aux éléments du manipulateur, il est alors possible de faire pivoter ces éléments les uns par rapport aux autres soit à droite soit à gauche en une seule séquence si la rotation à effectuer est inférieure à α, en plusieurs séquences si cette rotation est supérieure à α.

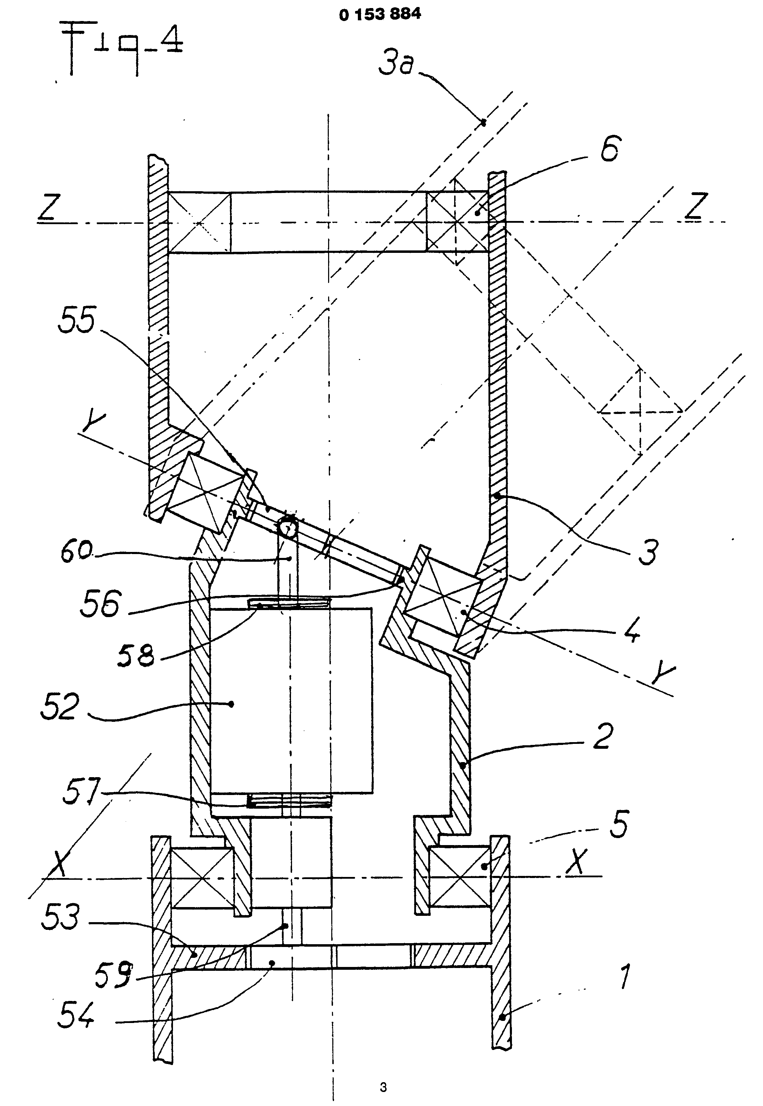

On se réfère maintenant plus précisément à la figure 3. 2 éléments associés (1) et (2), à corps cylindrique sont représentés. Une des faces du corps cylindrique de chaque élément est perpendiculaire à l'axe du cylindre — faces (10) et (20) —, l'autre face fait un angle θ avec ce même axe — faces (11) et (21) —. Le moyen d'accouplement entre les deux éléments (1) et (2) est réalisé par le roulement (4) placé dans le plan des faces obliques (11) et (12), avec les éléments amont et aval par les roulements (5) et (6) situés dans les plans des faces (10) et (20) perpendiculaires à l'axe du corps cylindrique et dans les plans des faces analogues des modules amont et aval.

Deux des tronçons associés aux éléments (1) et (2) sont figurés en (12) et (22) ; reliés par le joint universel (7) ils constituent une portion de l'arbre d'entraînement. Le tronçon (22) est monté dans l'axe du couple des éléments (2) et (3) par l'intermédiaire de deux roulements (23) et (33).

Il en est de même du tronçon (12) monté dans l'axe de l'élément (1), [roulement (13)].

L'entraînement de l'élément (2) est commandé par l'embrayage (24) dont le moyeu est fixé sur le tronçon (22) par la clavette (25). De même le corps cylindrique (1) est commandé en rotation par l'embrayage (14) fixé sur le tronçon (12) par la clavette (15).

La liaison entre les éléments (1) et (2) est assurée par le frein (8), et entre les éléments (2) et (3) par le frein (9). Des disques à fentes (16) et (36) sont montés sur les éléments (1) et (3) et deux capteurs magnétiques (26 et 27) sur le module (2). La position respective des éléments (1) (2) et (3) entre eux peut ainsi être repérée.

Le fonctionnement est alors le suivant : les trois éléments sont normalement rendus solidaires par les freins (8) et (9). L'arbre constitué par les tronçons (12) et (22) et le joint universel (7) a un mouvement oscillant donné par le dispositif suivant la figure 2. Revenons à cette figure : le moteur (43) entraîne le moyeu d'excentrique (45). La tête de bielle (46) associée à cet excentrique, est animée de ce fait d'un mouvement circulaire autour de l'axe fixe (51). Le pied de bielle (49), maintenu dans le trou (50) du tronçon (22), est animé, lui, à la fois d'un mouvement linéaire et d'un mouvement d'oscillation d'amplitude 2α. Revenons à la figure 3 : si l'on relâche le frein (9) et que l'on sollicite l'embrayage (34), on aura une rotation de l'élément (3) par rapport à l'élément (2) dans le plan ZZ. De même, si l'on relâche le frein (8) et que l'on sollicite l'embrayage (24), on aura une rotation de l'élément (1) par rapport à l'élément (2) dans le plan YY.

Le mouvement s'effectue dans le sens des aiguilles d'une montre ou dans le sens inverse suivant l'instant de la commande.

Le montage des éléments d'accouplement avec bague et double roulement est représenté sur la figure (5) sur laquelle on retrouve les éléments (1) (2) et (3) ; pour ne pas charger la figure, les pièces logées à l'intérieur des éléments d'accouplement n'ont pas été représentées. Les roulements (4a) (4b) (5a) (5b) sont logés respectivement dans les bagues extérieures (61) (62).

La jonction et la séparation des éléments d'accouplement (1) et (2) s'effectuent par montage ou démontage de la bague (61) qui sera de préférence réalisée en 2 parties ; il en sera de même pour les bagues (62) reliant les éléments d'accouplement (2) et (3).

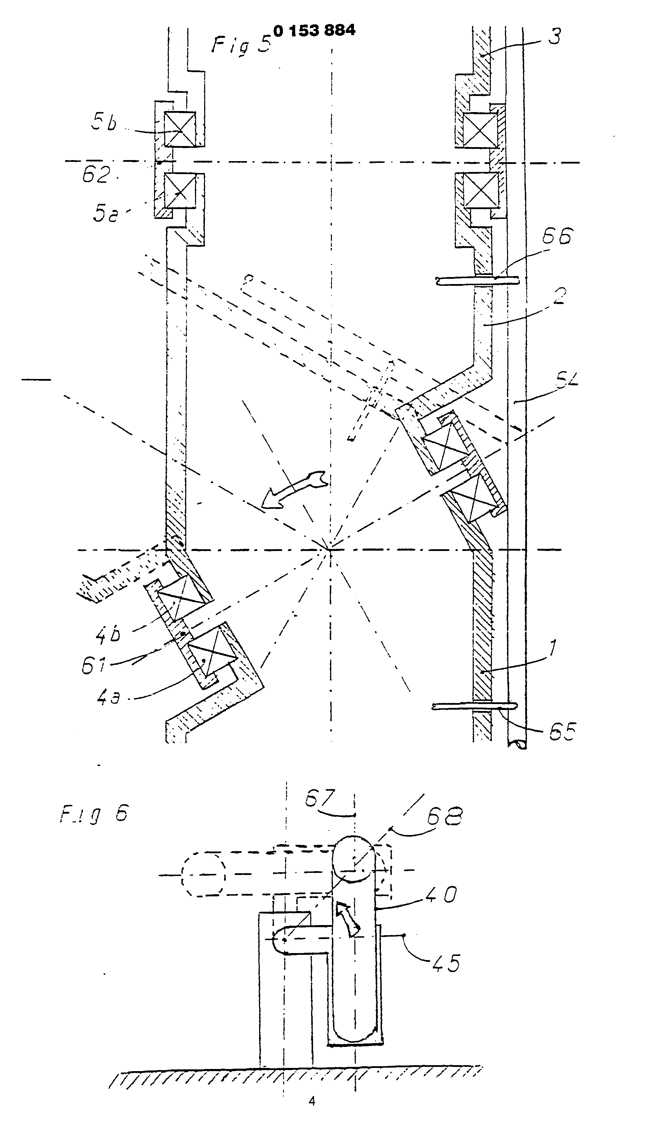

Les câbles, tuyauteries et éventuellement arbre d'entraînement seront de préférence fixés à ces bagues pour éviter une trop forte déformation lors des mouvements de rotation des éléments d'accouplement les uns par rapport aux autres. Sur la figure 5 est représenté le câble (64) avec des départs (65) et (66) respectivement vers les éléments d'accouplement (1) et (2).

On se réfère maintenant à la figure 6. On retrouve en traits pleins, comme sur la figure 1 le bras de manipulation monté sur une manivelle (40) avec axe horizontal (45) ; le fonctionnement du bras est possible quel que soit l'inclinaison de cet axe ; en fonction de l'utilisation, on pourra par exemple disposer l'axe verticalement (67) ou incliné (68).

On se réfère à la figure 4. Nous retrouvons sur cette figure les éléments (1) (2) et (3) et les roulements (4) et (5) faisant accouplement entre eux. Le moyen d'entraînement du module (2) par rapport aux modules (1) et (3) est ici constitué d'un moteur (52) attaquant les roues à denture intérieure (53) et (56) par l'intermédiaire des pignons (54) et (55). Des embrayages (57) et (58) permettent de solidariser ou désolidariser les pignons (54) et (55) des bouts d'arbre (59) et (60) du moteur (52). On a représenté sur cette figure en 3a, en tirets, la position de l'élément (1) après rotation de 180°.

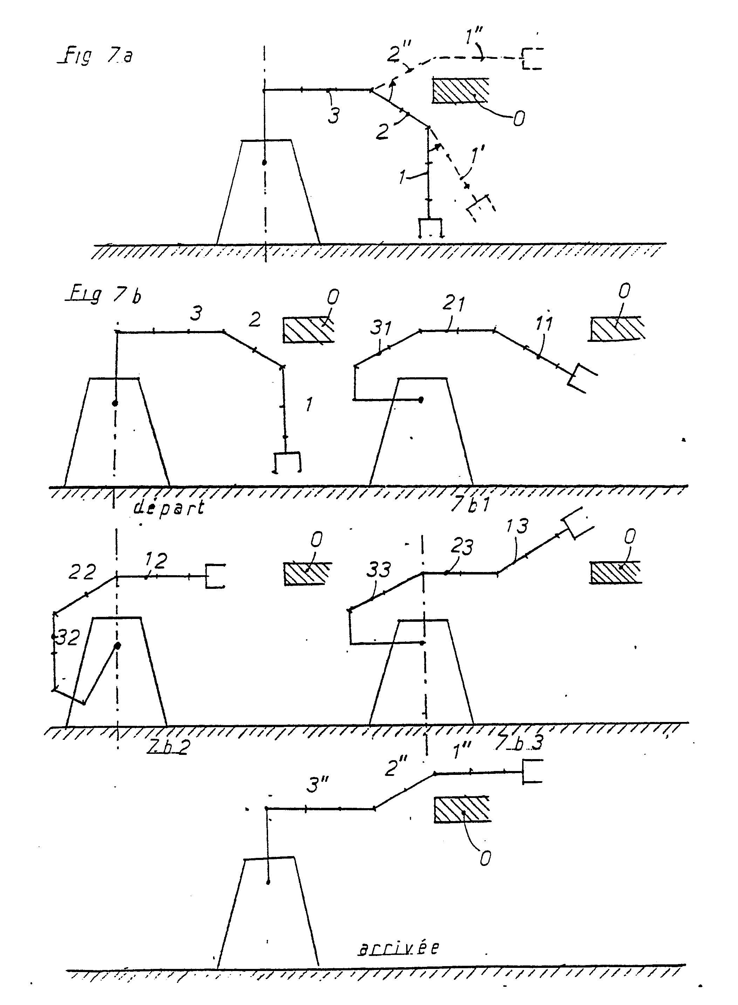

Bien entendu, un montage avec un bout d'arbre est aussi possible. On notera que la modularité intrinsèque des éléments constituant le bras de manipulation autorise l'exploitation du modèle mathématique représentatif du bras de manipulation suivant plusieurs algorithmes de commande. A titre d'exemple, les Figures 7a et 7b en représentent deux parmi d'autres.

Sur la Fig. 7a, chaque élément de liaison prend sa nouvelle position angulaire par rapport à l'élément qui le précède : 1 devient 1', 2 devient 2', 3 ne change pas ; le bras prend sa nouvelle position 1", 2", 3 sans pouvoir éviter l'obstacle 0.

La Fig. 7b représente une autre méthode opérationnelle avec les positions « départ » et « arrivée » du bras manipulateur et les positions intermédiaires 7b1, 7b2 et 7b3. Dans une première séquence chaque élément prend physiquement la place de celui qui le précède, jusqu'à ce que le premier élément atteigne l'élément pour lequel position de départ et d'arrivée sont identiques ; dans une deuxième séquence chaque élément prend successivement la place de l'élément qui le suit dans la configuration « arrivée ».

Ainsi l'élément 1 prend successivement la position $1_1$ de l'élément 2, puis $1_2$ de l'élément 3 ; ensuite il prend la position $1_3$ de l'élément 2" puis sa position finale 1".

Revenons maintenant à la figure 1. Le manipulateur dans sa version complète est constitué de :
un dispositif à manivelle monté sur un pied fixe (52) ;

un certain nombre de couples d'éléments modulaires (1) (2) montés en série le premier de ces éléments (1a) étant fixé à la manivelle (40), le dernier (2a) portant la main de préhension (41).

un dispositif de commande de mouvement alternatif suivant figure 2 fixé également sur la manivelle d'entraînement et faisant pivoter les éléments les uns par rapport aux autres.

Ce dernier dispositif peut être remplacé par des moteurs et des couples d'engrenages associés à chaque module (fig. 4).

On notera l'intérêt de combiner les 3 dispositifs ci-dessus : manivelle, éléments d'accouplement avec leurs tronçons d'entraînement et dispositif de commande à mouvement alternatif. On peut de cette façon donner au bras de manutention la longueur utile nécessaire tout en conservant toutes les possibilités d'orientation des éléments les uns par rapport aux autres. La forme et la longueur du bras peuvent à tout instant être adaptées aux conditions optimum correspondant aux mouvements à effectuer.

On notera également les avantages de chacun des moyens d'entraînement décrits ci-dessus et représentés respectivement sur les figures 3 et 4. Dans le premier cas, un seul moteur entraîne l'ensemble des tronçons constituant l'arbre de transmission du mouvement angulaire aux éléments d'accouplement, d'où une simplicité de conception qui convient aux applications où la rapidité et la simultanéité des mouvements ne sont pas des conditions essentielles.

Dans le second cas, chaque élément ou couple d'éléments d'accouplement dispose de son propre moyen d'entraînement ; on peut donc modifier quasi simultanément dans le sens voulu la position angulaire de tous les éléments d'accouplement l'un par rapport à l'autre, d'où une très grande rapidité de déplacement de la main de préhension. On peut également par une programmation pertinente, donner à chaque couple d'éléments de liaison la position angulaire de celui qui le suit immédiatement tout en faisant tourner la manivelle (40) d'un angle correspondant à la longueur de 2 éléments. En répétant cette opération, on obtient un déroulement progressif du bras de manutention suivant une trajectoire connue et modifiable.

**Revendications**

1. Bras de manipulation composé de plusieurs éléments disposés en série, un élément (2) comportant un axe et un premier moyen d'accouplement (5, 6) qui le relie à un premier élément adjacent (3) avec possibilité de rotation autour d'un premier axe de pivotement confondu avec ledit axe de l'élément, et un second moyen d'accouplement (4) qui le relie avec un second élément adjacent (1) avec possibilité de rotation autour d'un second axe de pivotement qui rencontre obliquement ledit axe de l'élément, des moyens étant prévus pour faire pivoter ledit élément indépendamment par rapport au premier et second élément adjacent et pour l'immobiliser à volonté, caractérisé en ce que lesdits moyens pour faire pivoter ledit élément par rapport aux premier et second éléments adjacents comprennent un arbre d'entraînement (12, 22) entraîné par un moyen moteur et qui peut être relié à volonté audit premier et/ou audit second élément adjacent par l'intermédiaire d'un embrayage (24), et en ce qu'il est prévu un frein (9) pour empêcher le pivotement relatif dudit élément par rapport à chacun des éléments adjacents.

2. Bras selon la revendication 1, caractérisé en ce qu'il est équipé d'un arbre d'entraînement commun à plusieurs éléments et formé d'un certain nombre de tronçons rigides (12, 22) disposés chacun selon l'axe d'un élément, lesdits tronçons étant reliés par des joints universels (7) placés à l'intersection dudit axe de l'élément avec ledit second axe de pivotement.

3. Bras de manipulation suivant la revendication 1 ou 2, caractérisé en ce que le premier élément modulaire est assujetti à une trajectoire curviligne par fixation sur un dispositif à manivelle (40).

4. Bras selon l'une des revendications 2 à 3, caractérisé en ce que lesdits moyens moteurs sont prévus pour imprimer à chaque élément un mouvement de rotation alternatif.

5. Bras de manipulation suivant la revendication 4, caractérisé en ce que le mouvement de rotation alternatif de l'arbre d'entraînement est donné par un système à moyeu excentrique (figure 2).

6. Bras suivant la revendication 1 caractérisé en ce que les moyens d'accouplement peuvent être constitués d'une bague extérieure ou intérieure et d'un double roulement.

7. Bras suivant la revendication 3 caractérisé en ce que l'axe du dispositif à manivelle (40) peut avoir une orientation quelconque.

8. Bras de manipulation suivant les revendications 1 à 7 caractérisé en un algorithme original de l'ordre d'enchaînement des séquences de commande du mouvement du bras permet de contourner les obstacles.

## Claims

1. Handling arm made up of several components connected in series, a component with an axle (2) and a first connecting means (5, 6) which links it to a first adjacent component (3) with a possible rotation round a first revolving axle joined to the above-mentioned axle of the component and a second connecting means (4) which links it to a second adjacent component (1) with possible rotation round a second revolving axle which cuts obliquely the above-mentioned axle of the component, means have been set up to rotate the above-mentioned component independently to the first and second adjacent component and to stop it when requested. The main features are that the above-mentioned means to rotate the above-mentioned component round the first and second adjacent means have a shaft (12, 22) which is run by an engine means and can be linked when requested by a clutch (24) to the first and/or second above-mentioned adjacent means, furthermore a brake is set up to prevent the relative rotation of the above-mentioned means round each adjacent means.

2. An arm according to claim number 1, the main feature is that it is equiped with a shaft common to several components and made up of a certain amount of stiff sections (12, 22) set up according to the axle of the component, the above-mentioned sections are linked by universal joints (7) placed at the intersection of the above-mentioned axle with the second above-mentioned rotating axle.

3. An handling arm according to the claim number 1 or 2, the main feature is that the first modular component describes a curvilinear trajectory as it is fixed on a crank device (40).

4. An arm according to one of the claims number 2 or 3, the main feature is that the engine means can transmit to each component an alternative rotating movement.

5. An handling arm according to the claim number 4, the main feature is that the alternative rotating movement is provided by an excentric hub system (picture 2).

6. An arm according to the claim number 1, the main feature is that the connecting means can be made up of an internal and external ring and double ball bearings.

7. An arm according to the claim number 3, the main feature is that the axle of the crank device can be placed in any position.

8. An handling arm according to the claims number 1 to 7, the main feature is that a special algorithm for the order in the control running enables to avoid obstacles.

## Patentansprüche

1. Handhabungarm mit mehreren serienmässigen Bestandteilen, einem Bestandteil (2) mit einer Achse und einem ersten Kupplungsmittel (5, 6), das ihn zu einem ersten angrenzenden Bestandteil (3) mit möglicher rotierender Bewegung um eine erste Drehachse zusammengeschmolzen mit der besagten Bestandteilachse verbindet und auch einem zweiten Kupplungsmittel (4), das ihn zu einem zweiten angrenzenden Bestandteil (1) mit möglicher rotierender Bewegung um eine zweite Drehachse verbindet, die die besagte Drehachse schief trifft ; Mittel gestatten den besagten Bestandteil um den ersten und zweiten angrenzenden Teil freizudrehen und in nach Wunsch festzuhalten. Durch folgendes bezeichnet und zwar haben die besagten Mittel zur Drehung des besagten Bestandteils um die ersten und zweiten angrenzenden Bestandteile eine durch einen Motor angetriebene Welle (12, 22), die nach Wunsch zum ersten und/oder zweiten angrenzenden Bestandteil mit einer Schaltung verbunden werden kann. Eine Bremse kann auch die Relativdrehung des besagten Bestandteils um jeden angrenzenden Bestandteil verhindern.

2. Arm gemäss der ersten Anforderung — Durch folgendes bezeichnet und zwar wird er mit einer Antriebswelle ausgestattet, die mehreren Bestandteilen gemeinsam ist und von starren Abschnitten (12, 22) gebildet wird. Jeder Abschnitt wird gemäss der Achse eines Bestandteils festgesetzt. Die besagten Abschnitte werden durch Universalgelenke (7) am Schnittpunkt der besagten Bestandteilachse mit der zweiten besagten Drehachse verbunden.

3. Handhabungarm gemäss der ersten oder zweiten Anforderung. Durch folgendes bezeichnet und zwar beschreibt der erste Modulbestandteil eine Kurve Festsetzung auf einer Kurbeleinrichtung (40).

4. Arm gemäss den zweiten und dritten Anforderungen. Durch folgendes bezeichnet und zwar können die besagten Motormittel jedem Bestandteil eine hin- und hergehende Rotationbewegung übermittel.

5. Arm gemäss der vierten Anforderung, durch folgendes bezeichnet und zwar wird die hin- und hergehende Rotationsbewegung der Welle durch eine exzentrische Nabe verursacht. (Bild 2).

6. Arm gemäss der ersten Anforderung. Durch folgendes bezeichnet und zwar können die Kupplungsmittel mit einem Aussen- und Innenring und einem Doppeltkugelager gebildet werden.

7. Arm gemäss der dritten Anforderung. Durch folgendes bezeichnet und zwar kann die Achse der Kurbel (40) irgendeine Richtung einnehmen.

8. Handhabungarm gemaess der ersten zu siebten Anforderung. Bezeichnet durch einen besonderen Algorithmus für die Befehlfolge in der Bewegung des Arms ; dies gestattet die Hindernisse zu vermeiden.

Fig. 1

0 153 884

2a 41

45 48 40

43

R

47

1

2

1a 52

Fig. 2

43

46 22

49

α

51 50

45

Fig. 3

0 153 884

**Fig.4**

Fig 5

5b
62
5a

66

2

54

4b
61
4a

1

65

Fig 6

67
68

40

45

4

Fig 7 a

Fig 7 b

départ          7 b1

7 b 2          7 b 3

arrivée